# EUROPEAN PATENT SPECIFICATION

(11) **EP 3 643 545 B1**
(45) Date of publication and mention of the grant of the patent: **17.01.2024**
(21) Application number: 18821625.3
(22) Date of filing: 15.06.2018
(51) Int. Cl.: B60H 1/00, B60H 1/32, F24F 13/22

(54) **VEHICLE AIR-BLOWING DEVICE**
FAHRZEUGGEBLÄSE
DISPOSITIF DE VENTILATION DE VÉHICULE

(30) Priority: 20.06.2017 JP 2017120806
(43) Date of publication of application: 29.04.2020
(73) Proprietor: Valeo Japan Co., Ltd., Saitama 360-0193 (JP)
(72) Inventor: SUZUKI, Yukio, Kumagaya-shi Saitama 360-0193 (JP)
(74) Representative: Valeo Systèmes Thermiques
(86) International application number: PCT/JP2018/022953
(87) International publication number: WO 2018/235740

(56) References cited:
- DE-A1- 19 957 858
- JP-A- H11 115 452
- JP-A- 2000 313 221
- JP-A- 2004 098 782
- JP-A- 2008 062 843
- JP-A- 2008 062 843
- JP-U- H0 419 310
- KR-B1- 101 364 512

## Description

### Technical Field

The present invention relates to a vehicle-use blowing device that smoothly drains off water, such as rainwater, that has entered an intake box.

### Background Art

An existing vehicle-use air conditioning device is configured to include an intake box into which internal and external air are selectively introduced, a blower that blows the introduced air downstream from the intake box, and a temperature regulating unit that dehumidifies and regulates the temperature of air from the blower, and blows the air out. The temperature regulating unit includes a cooling unit and a heating unit, and the cooling unit and the heating unit are formed integrally or separately. Also, the intake box, the blower, and the temperature regulating unit are formed integrally or separately. In the case of this kind of vehicle-use air conditioning device, there is concern about a problem wherein consideration given to rainwater entering the intake box is insufficient, rainwater accumulates in the intake box, and mold caused by the accumulated water occurs, or the like. Therefore, a vehicle-use air conditioning device wherein a guide passage is provided to guide fluid accumulated in a bottom wall portion of an intake box into a blower has been disclosed (for example, refer to Patent Document 1).

### Citation List

### Patent Literature

Patent Document 1: JP-A-2004-98782

### Summary of Invention

### Technical Problem

The vehicle-use air conditioning device disclosed in Patent Document 1 is such that water accumulated in the bottom wall portion of the intake box is guided into a scroll case, after which the guided water is discharged from an air blowout unit together with blown air. However, when a speed of blown air is low, or when an amount of guided water is large, there is a problem in that water accumulates in a bottom in the scroll casing, and drainage cannot be carried out smoothly. When water accumulates in a scroll, there is also a problem in that fluid enters into an interior of an impeller motor.

Therefore, an object of the invention is to provide a vehicle-use blowing device that has a function of draining off rainwater that has entered an intake box without the rainwater accumulating in a scroll.

### Solution to Problem

The inventor, after an earnest examination, has found that the heretofore described problem can be resolved by providing a water conducting groove in an intake unit of a vehicle-use blowing device, and leading an extremity of the water conducting groove to an upstream side of an air blowout unit of a blowing unit, and has completed the invention. That is, a vehicle-use blowing device according to the invention comprises all the features of claim 1.

The vehicle-use blowing device according to the invention is preferably such that the water conducting groove extremity is dammed by a wall of a bell mouth that forms an aperture portion of the suction port, forming one portion of a reservoir portion that forms the drainage place when water is accumulated in the water conducting groove, and when the impeller rotates, a surface of water accumulated in the reservoir portion rises and surmounts an end face of the bell mouth, and the water is fed to the air blowout unit and drained off. Water accumulated in the intake unit can be led to the air blowout unit of a blower by utilizing the air flow formed by the impeller.

The vehicle-use blowing device according to the invention is preferably such that a water conducting groove downstream portion that forms the drainage place is formed of a wall of the bell mouth and an intake unit bottom wall that comes into contact with the wall of the bell mouth. Manufacture of the vehicle-use blowing device can be facilitated.

The vehicle-use blowing device according to the invention is preferably such that a water conducting groove downstream portion that forms the drainage place forms one portion of a bell mouth that forms an aperture portion of the suction port. A smooth sucking in of air can be carried out in the bell mouth.

The vehicle-use blowing device according to the invention is preferably such that a height of a bottom face of the water conducting groove extremity is lower than a height of an upper edge of a side face of the water conducting groove, and a water conducting groove downstream portion that forms the drainage place extends as far as an interior of a bell mouth that forms an aperture portion of the suction port. Water can be accurately led using an intended region.

The vehicle-use blowing device according to the invention is preferably such that a guide passage that forms the drainage place is provided in a bell mouth that forms an aperture portion of the suction port, a height of a bottom face of the water conducting groove extremity is lower than a height of an upper edge of a side face of the water conducting groove, and the water conducting groove extremity is connected to the guide passage. Water accumulated in the intake unit can be smoothly led to the air blowout unit via the guide passage.

The vehicle-use blowing device according to the invention is preferably such that upper edges of side faces of the water conducting groove are such that a height from a groove bottom of an upper edge on an upstream side of the airflow is greater than that of an upper edge on a downstream side, or heights from the groove bottom are the same. When the airflow is formed in an interior of the intake unit, water flowing along the water conducting groove becomes liable to splash, but the splashing of the water can be prevented.

The vehicle-use blowing device according to the invention is preferably such that a channel sectional area of the water conducting groove decreases further the nearer to the extremity. A water level with respect to a groove depth can be lowered on an upstream side of the water conducting groove, because of which water can be prevented from overflowing from the water conducting groove. Meanwhile, the water level with respect to the groove depth can be raised on a downstream side of the water conducting groove, because of which water can be efficiently drained off at the drainage place.

The vehicle-use blowing device according to the invention is preferably such that a ridge portion with an L-form cross-section is provided in a vertical direction on, of side walls of the intake unit, a side wall with which a flow of external air comes into contact, and a lower end of the ridge portion is disposed on an upper side of the water conducting groove, or farther than the water conducting groove to the upstream side of the airflow. Water is prevented from arriving at the suction port of the blowing unit via the side wall of the intake unit, and the water can be led to the water conducting groove.

### Advantageous Effects of Invention

The disclosure can provide a vehicle-use blowing device that has a function of draining off rainwater that has entered an intake box without the rainwater accumulating in a scroll.

### Brief Description of Drawings

[Fig. 1] Fig. 1 is a front view including a partial cutaway portion showing a vehicle-use blowing device.
[Fig. 2] Fig. 2 is a side sectional view of the vehicle-use blowing device of Fig. 1.
[Fig. 3] Fig. 3 is a partial schematic view showing a form of a bottom of an intake unit of the vehicle-use blowing device according to an embodiment.
[Fig. 4] Fig. 4 is a D-D line sectional view of Fig. 3.
[Fig. 5] Fig. 5 is a schematic view illustrating a positional relationship between a blowing unit and an airflow upstream side water conducting groove of the vehicle-use blowing device of a first aspect according to the embodiment.
[Fig. 6] Fig. 6 is a drawing showing a position of a water conducting groove cross-section.
[Fig. 7] Fig. 7 is a C-C line sectional view of Fig. 6.
[Fig. 8] Fig. 8 is a B-B line sectional view of Fig. 6.
[Fig. 9] Fig. 9 is an A-A line sectional view of Fig. 6, and is a drawing showing a first variation.
[Fig. 10] Fig. 10 is an A-A line sectional view of Fig. 6, and is a drawing showing a second variation.
[Fig. 11] Fig. 11 is an A-A line sectional view of Fig. 6, and is a drawing showing a third variation.
[Fig. 12] Fig. 12 is a schematic view illustrating a positional relationship between a blowing unit, an airflow upstream side water conducting groove and a guide passage of the vehicle-use blowing device of a second aspect according to the embodiment.
[Fig. 13] Fig. 13 is a perspective schematic view of the intake unit of the vehicle-use blowing device according to the embodiment, seen from a blowing unit suction port side. Description of Embodiments

An aspect of the invention will be described with reference to the attached drawings. An embodiment described hereafter is an example of the invention, and the invention is not limited to the following embodiment. Components with the same reference sign in the specification and the drawings are assumed to indicate components identical to each other. Various form changes may be made, provided that the changes achieve an advantage of the invention.

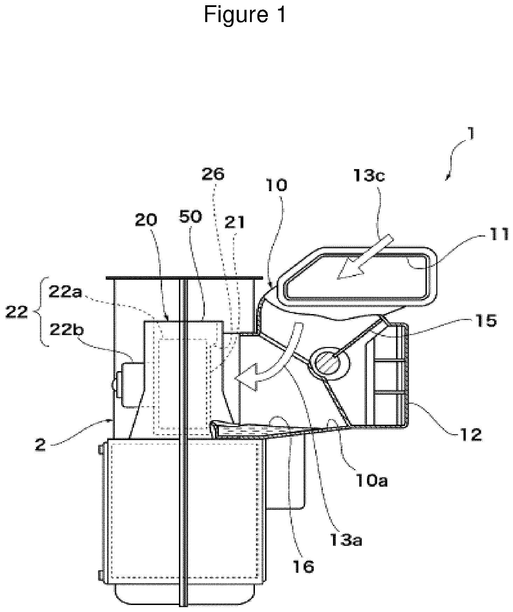

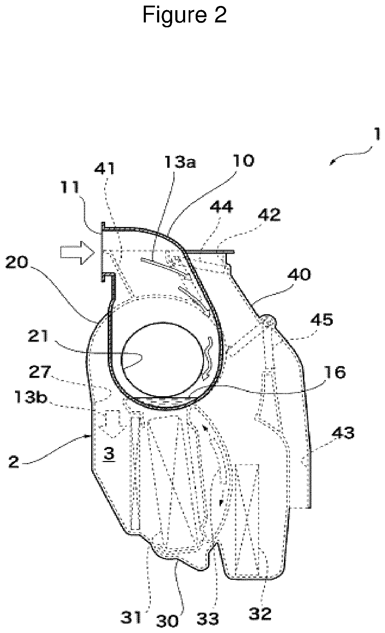

Firstly, a vehicle-use blowing device 1 will be described, while referring to Fig. 1 and Fig. 2. The vehicle-use blowing device 1 includes an intake unit 10, a suction port 21 that opens in a horizontal direction, and a blowing unit 20 having an impeller 22a that forms an airflow 13a and an air blowout unit 27 that blows an airflow 13b out downward. The vehicle-use blowing device 1 may further have a temperature regulating unit 30 and an air distributing unit 40. The intake unit 10, the blowing unit 20, the temperature regulating unit 30, and the air distributing unit 40 are formed integrally in a case 2. Alternatively, the intake unit 10, the blowing unit 20, the temperature regulating unit 30, and the air distributing unit 40 may each be separate bodies, and the case 2 formed by the separate bodies being assembled. An internal space of the case 2 is an air passage 3.

In the intake unit 10, an external air inlet port 11 and an internal air inlet port 12 are opened in the case 2, and an internal-external air switching door 15 is disposed inside the case 2, as shown in Fig. 1.

The blowing unit 20 is such that a blower 22 is disposed in an interior of a scroll casing 50, as shown in Fig. 1. The blower 22 is disposed downstream of the intake unit 10. The blower 22 has, for example, the impeller 22a, which is a sirocco fan, a turbo fan, or the like, and a motor 22b that drives the impeller 22a. The suction port 21 is an aperture of a bell mouth 26. In the vehicle-use blowing device of the embodiment, the suction port 21 opens in the horizontal direction. Air sucked into the scroll casing 50 from the suction port 21 owing to a rotation of the impeller 22a is blown out from the air blowout unit 27 in a downward direction.

The intake unit 10 of the vehicle-use blowing device 1 has a bottom wall 10a that inclines to a lower side toward the suction port 21, as shown in Fig. 1. Herein, external air 13c taken in from the external air inlet port 11 may include water such as rainwater, and water 16 is liable to accumulate in a bottom of the intake unit 10. In order to facilitate understanding, it is assumed that water 16 that has entered the intake unit 10 is not drained off, and is shown in a state accumulated on the bottom wall 10a of the intake unit 10 in Fig. 1 and Fig. 2. According to the vehicle-use blowing device 1 according to the embodiment, accumulated water shown in Fig. 1 and Fig. 2 is effectively drained off to the air blowout unit 27 shown in Fig. 2.

A cooling heat exchanger 31 is disposed in an interior of the temperature regulating unit 30, as shown in Fig. 2. The cooling heat exchanger 31 is disposed downstream of the blower 22, a refrigerant can circulate as one portion of a refrigeration cycle (not shown), and the cooling heat exchanger 31 cools blown air as necessary. A heating heat exchanger 32 and an air mix door 33 may be disposed downstream of the cooling heat exchanger 31 in the temperature regulating unit 30. The heating heat exchanger 32 is such that, for example, water warmed by exhaust heat of an engine can circulate, and the heating heat exchanger 32 heats blown air as necessary. The air mix door 33 regulates a ratio of air (cold air) that bypasses the heating heat exchanger 32 and a ratio of air (warm air) that passes through the heating heat exchanger 32.

The air distributing unit 40 has a defrosting aperture portion 41, a vent aperture portion 42, and a foot aperture portion 43, as shown in Fig. 2. The defrosting aperture portion 41 is connected indirectly, via a defrosting duct (not shown), or directly to an in-vehicle defrosting outlet (not shown). The vent aperture portion 42 is connected indirectly, via a vent duct (not shown), or directly to an in-vehicle vent outlet (not shown). The foot aperture portion 43 is connected indirectly, via a foot duct (not shown), or directly to an in-vehicle foot outlet (not shown). Each in-vehicle outlet (not shown) blows air temperature-regulated in the temperature regulating unit 30 toward an interior of a vehicle. An opening of each of the aperture portions 41, 42, and 43 is regulated by mode doors 44 and 45.

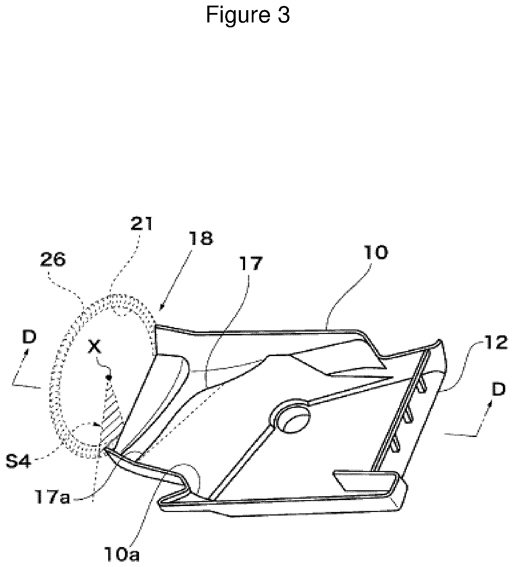

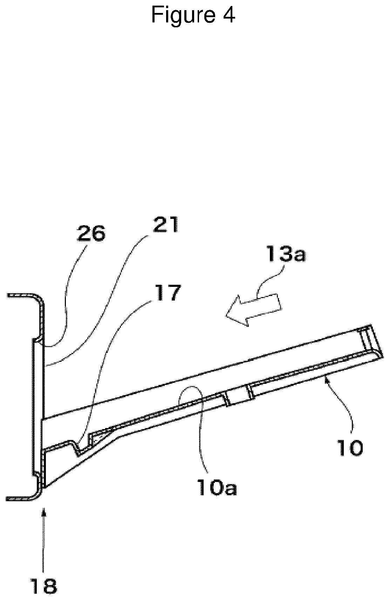

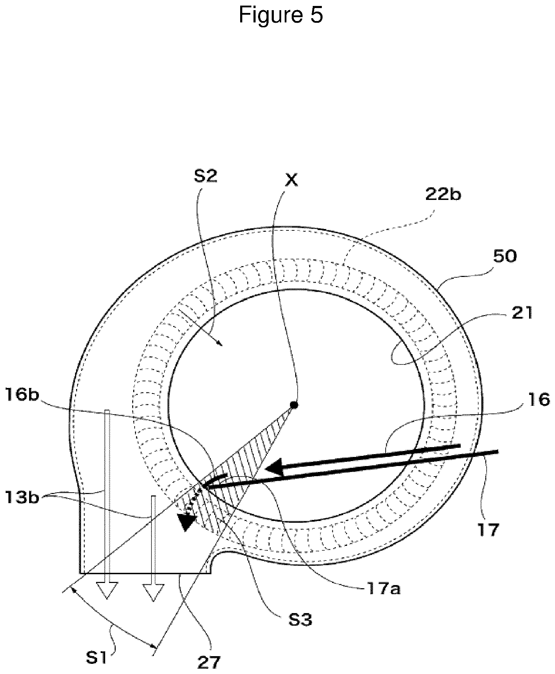

The vehicle-use blowing device according to the embodiment is such that the intake unit 10 has a water conducting groove 17 in the bottom wall 10a, as shown in Fig. 3 and Fig. 4. The water conducting groove 17 extends in a direction approaching the suction port 21 side, as shown in Fig. 3, while traversing the suction port 21 as shown in Fig. 3, Fig. 4, and Fig. 5. Further, as shown in Fig. 3 and Fig. 5, an extremity 17a of the water conducting groove 17 is disposed in a region S4 of a boundary 18 between the intake unit 10 and the blowing unit 20, the region S4 being such that an overlap region S3, wherein a region S1 linking a center of rotation X of the impeller 22a and the air blowout unit 27 and a region S2 on an inner diameter side of the impeller 22a overlap, is projected onto the boundary 18, and the water conducting groove extremity 17a forms a drainage place for drainage. The inner diameter side of the impeller 22a is a side farther to the center of rotation X than a blade outer diameter formed by connecting outer diameter ends of a large number of blades included in the impeller 22a. Also, the extremity 17a of the water conducting groove 17 being disposed in the region S4 includes the extremity 17a of the water conducting groove 17 being disposed in a columnar space having a predetermined height on the intake unit 10 side, with the region S4 as a bottom face. Herein, the predetermined height of the columnar space is the height of a space encompassing a thickness of a wall delineating the boundary 18 between the intake unit 10 and the blowing unit 20, a thickness of a sealing material between members, and, when providing an irregularity necessary for forming the case 2 in a wall of the region S4, a size of the irregularity. That is, because of the structure of the case 2, an aspect wherein the water conducting groove extremity 17a and the region S4 on the boundary 18 do not come into contact is also included in the embodiment.

The vehicle-use blowing device according to the embodiment is such that the water conducting groove 17 extends so as to traverse the suction port 21, as shown in Fig. 3, Fig. 4, and Fig. 5, because of which water on the bottom wall 10a of the intake unit 10 falls into the water conducting groove 17 while being moved to the suction port 21 side, owing to the inclination of the bottom wall 10a and the airflow 13a.

As shown in Fig. 4, the bottom wall 10a is inclined downward from an upstream side toward a downstream side of the airflow 13a flowing through the intake unit 10. As shown in Fig. 3, the water conducting groove 17 extends in a direction approaching the suction port 21 side. Consequently, as the water conducting groove 17 extends so that the extremity 17a thereof nears the suction port 21 side, a groove bottom is also inclined downward toward the extremity 17a. Consequently, as shown in Fig. 5, the water conducting groove 17 is inclined further downward as the water conducting groove 17 nears the extremity 17a, because of which water 16 flowing along the water conducting groove 17 flows toward the extremity 17a. In this way, water in the intake unit 10 is collected in the water conducting passage extremity 17a, and the extremity 17a forms a drainage place for drainage.

In a first aspect of the vehicle-use blowing device according to the embodiment, a reservoir portion that forms a drainage place is formed of a bottom of an extremity of a water conducting groove, a groove side wall, and a bell mouth wall. Water that flows along the water conducting groove 17 accumulates in the reservoir portion. At this time, in the first aspect of the vehicle-use blowing device according to the embodiment, the water conducting groove extremity 17a is dammed by a wall of the bell mouth 26 that forms the aperture portion of the suction port 21, as shown in Fig. 3, forming one portion of the reservoir portion that forms a drainage place when water is accumulated in the water conducting groove 17, and when the external air 13c, including external air and the like, is sucked into the intake unit 10 owing to the impeller 22a rotating, a surface of water accumulated in the reservoir portion rises and surmounts an end face of the bell mouth 26, and the water 16 is fed to the air blowout unit 27 and drained off, as shown by reference sign 16b of Fig. 5.

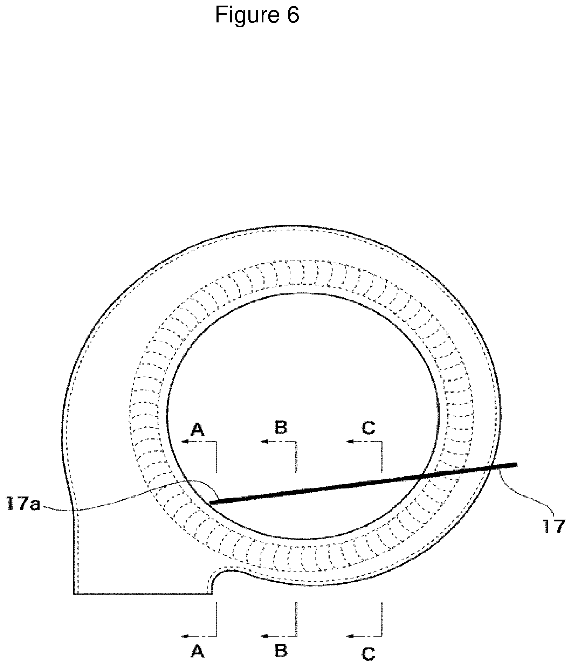

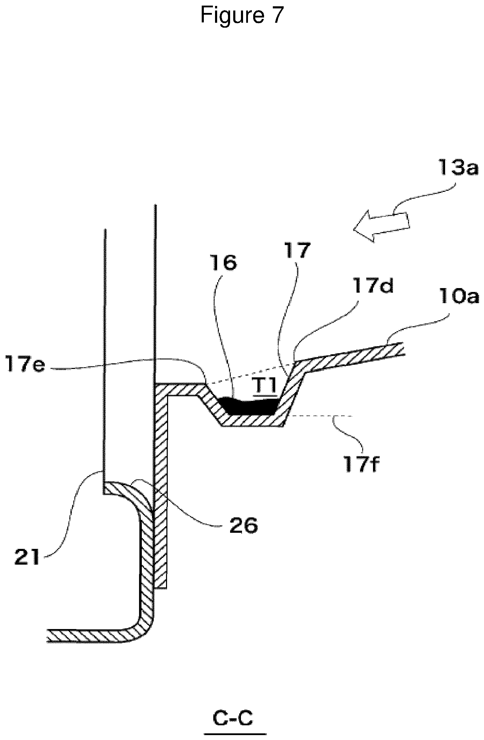

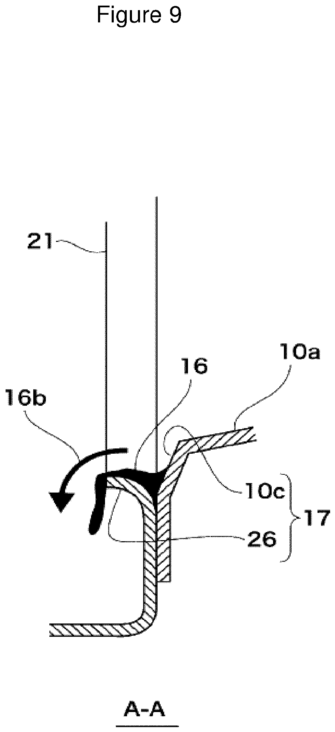

Next, a variation of the drainage place will be described. Firstly, sectional schematic views of the water conducting groove 17 at positions C-C, B-B, and A-A shown in Fig. 6 are shown in Fig. 7, Fig. 8, and Fig. 9. As shown in Fig. 7, Fig. 8, and Fig. 9, the water conducting groove 17 approaches the suction port 21 side as the water conducting groove 17 nears the extremity 17a, and the groove bottom becomes lower. Herein, the vehicle-use blowing device according to the embodiment is such that a downstream portion of the water conducting groove 17 that forms a drainage place is preferably formed of a wall of the bell mouth 26 and a bottom wall 10c of the intake unit that comes into contact with the bell mouth wall, as shown in Fig. 9. Owing to the wall of the bell mouth 26 and the bottom wall 10c of the intake unit that comes into contact with the bell mouth wall, the downstream portion of the water conducting groove 17 forms a reservoir portion. When the external air 13c, including rainwater and the like, is sucked into the intake unit 10 owing to the impeller 22a rotating, the surface of water accumulated in the reservoir portion rises and surmounts an end face of the bell mouth 26, and the water 16 is fed to an air blowout unit (not shown) and drained off, as shown by reference sign 16b of Fig. 9. The variation shown in Fig. 9 can be configured by the bottom wall 10c of the intake unit being brought into contact with a wall of the scroll casing 50 in a vicinity of the bell mouth, and a manufacturing process is simple, because of which manufacturing the vehicle-use blowing device can be facilitated.

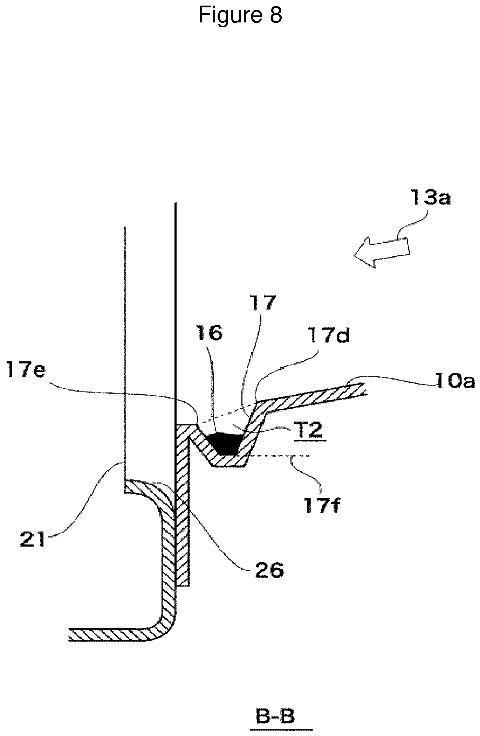

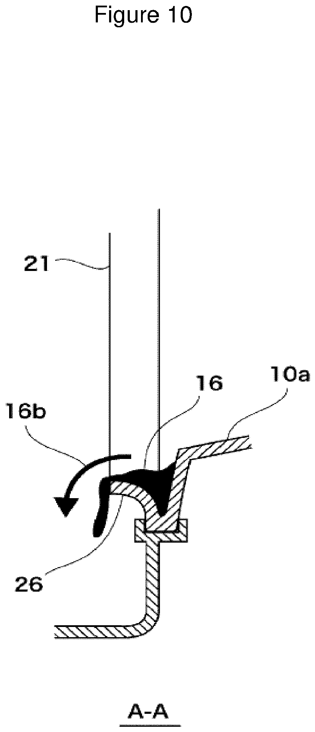

A second variation of the drainage place will be described. The sectional schematic views of the water conducting groove 17 shown in Fig. 7 and Fig. 8 are common to the first and second variations. Herein, the vehicle-use blowing device according to the embodiment is such that a downstream portion of the water conducting groove 17 that forms a drainage place preferably forms one portion of the bell mouth 26 that forms the aperture portion of the suction port 21, as shown in Fig. 10. In the downstream portion of the water conducting groove 17, a side wall nearer the suction port 21 doubles as one portion of the bell mouth by having the form of the bell mouth 26, and a farther side wall is a vertical wall or an inclined wall. When the external air 13c, including external air and the like, is sucked into the intake unit 10 owing to the impeller 22a rotating, the surface of water accumulated in the reservoir portion rises and surmounts the groove side wall with the form of the bell mouth 26, and the water 16 is fed to an air blowout unit (not shown) and drained off, as shown by reference sign 16b of Fig. 10. The variation shown in Fig. 10 is such that the side wall of the water conducting groove 17 nearer the suction port 21 has the form of the bell mouth 26, because of which a smooth sucking in of air can be carried out even when no water is accumulated.

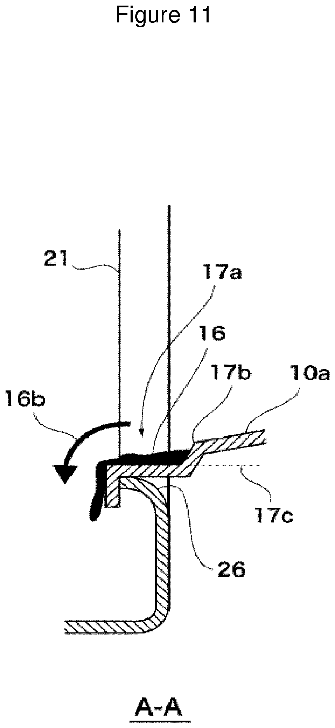

A third variation of the drainage place will be described. The sectional schematic views of the water conducting groove 17 shown in Fig. 7 and Fig. 8 are common to the first and third variations. Herein, the vehicle-use blowing device according to the embodiment is preferably such that, as shown in Fig. 11, a height 17c of a bottom face of the water conducting groove extremity 17a is lower than a height of an upper edge 17b of a side face of the water conducting groove, and a downstream portion of the water conducting groove that forms the drainage place extends as far as an interior of the bell mouth 26 that forms the aperture portion of the suction port 21. By the height 17c of the bottom face of the water conducting groove extremity 17a being lower than the height of the upper edge 17b of a side face on an upstream side of the water conducting groove, drainage can be reliably carried out through the downstream portion of the water conducting groove extending as far as the interior of the bell mouth 26. Consequently, by disposing the downstream portion of the water conducting groove in an intended drainage place, water can be guided more accurately to the drainage place.

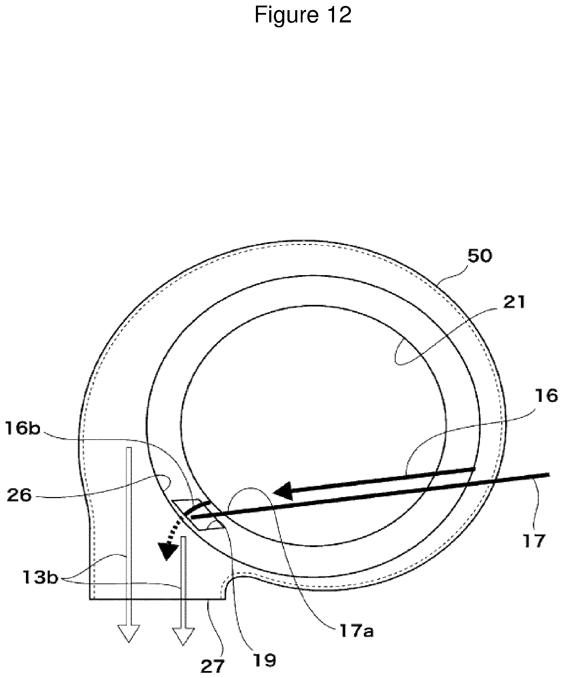

Next, a second aspect of the vehicle-use blowing device according to the embodiment will be described. The vehicle-use blowing device of the second aspect is preferably such that, as shown in Fig. 12, a guide passage 19 that forms a drainage place is provided in the bell mouth 26 that forms the aperture portion of the suction port 21, the height of the bottom face of the water conducting groove extremity 17a is lower than the height of the upper edge of the side face of the water conducting groove, and the water conducting groove extremity 17a is connected to the guide passage 19. The guide passage 19 that forms the drainage place is preferably a hole, provided in the bell mouth 26, that allows a space on the intake unit side and a space on the blowing unit side to communicate. Water is drained off by passing through the hole. Also, the guide passage 19 may be a notch (not shown) provided in an end portion of the bell mouth 26. As a height of the end portion of the bell mouth 26 is lower in the notch, water is drained off. By the water conducting groove extremity 17a being connected to the guide passage 19, water flowing along the water conducting groove 17 passes through the guide passage 19, and is reliably drained off. The height of the bottom face of the water conducting groove extremity 17a is lower than the height of the upper edge of the side face of the water conducting groove. Because of this, water collected in the water conducting groove extremity 17a is reliably led to the guide passage 19, without overflowing from the water conducting groove.

Next, a sectional form of the water conducting groove 17 will be described. A sectional form of the water conducting groove 17 formed of a side wall and a groove bottom wall is, for example, a U-form, a V-form, a semicircular form, a semielliptical form, or a modified form of these forms. There is an aspect such that the sectional form is maintained as the same form as the water conducting groove 17 advances in a downstream direction, an aspect such that a size of the sectional form is increased or reduced while the sectional form remains as a similar form, and an aspect such that the sectional form is transformed into another form.

Also, the vehicle-use blowing device according to the embodiment is preferably such that of side face upper edges of the water conducting groove 17, a height from a groove bottom 17f of an upper edge 17d on the upstream side of the airflow 13a is greater than that of an upper edge 17e on the downstream side, as shown in Fig. 7 and Fig. 8. Also, heights from the groove bottom 17f of the upper edge 17d and the upper edge 17e may be the same. When the airflow 13a is formed in an interior of the intake unit, there is concern that the airflow will be disturbed in the water conducting groove 17, but by adopting the heretofore described relationship between the heights of the upper edge 17d and the upper edge 17e, disturbance of the airflow 13a is restricted, and water flowing along the water conducting groove becomes unlikely to splash out.

The vehicle-use blowing device according to the embodiment is preferably such that, as shown in Fig. 7 and Fig. 8, a channel sectional area T of the water conducting groove 17 decreases further the nearer to the extremity (Fig. 8 is nearer to the extremity than Fig. 7) (a channel sectional area in Fig. 7 is indicated by T1, and a channel sectional area in Fig. 8 is indicated by T2). A water level with respect to a groove depth can be lowered on the upstream side of the water conducting groove 17, because of which water can be prevented from overflowing from the water conducting groove 17. Meanwhile, the water level with respect to the groove depth can be raised on the downstream side of the water conducting groove 17, because of which water can be efficiently drained off at the drainage place.

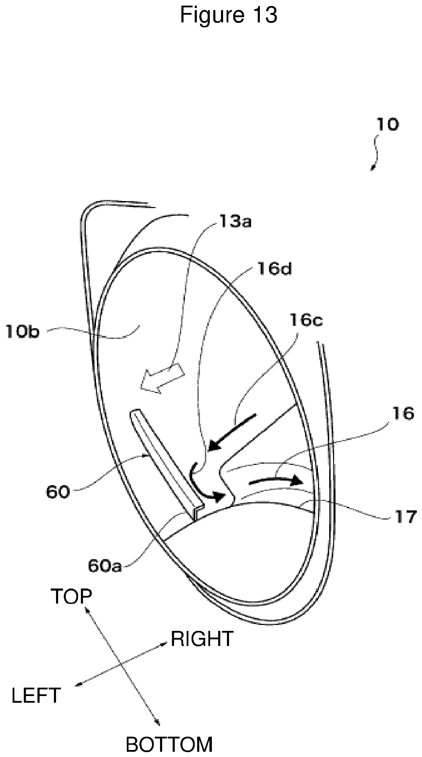

Next, a mechanism of efficiently collecting water adhering to a side wall of the intake unit in the water conducting groove 17 will be described. The vehicle-use blowing device according to the embodiment is preferably such that a ridge portion 60 with an L-form cross-section is provided in a vertical direction on, of side walls of the intake unit 10, a side wall 10b with which a flow of external air comes into contact, and a lower end 60a of the ridge portion 60 is disposed on an upper side of the water conducting groove 17, as shown in Fig. 13. Referring to, for example, Fig. 1, the side wall 10b with which a flow of external air comes into contact is the opposing side wall seen from the external air inlet port 11 side. A large amount of water included in the external air 13c comes into contact with, and adheres to, the side wall 10b. Further, water adhering to the side wall 10b is drawn toward the suction port side of the blowing unit by the airflow 13a, while falling downward owing to gravity. Herein, when water moving along the side wall 10b is drawn over the water conducting groove 17 to the suction port side, the water does not flow into the water conducting groove 17. Therefore, the ridge portion 60 with an L-form cross-section is provided in a vertical direction. Herein, the lower end 60a of the ridge portion 60 is disposed on the upper side of the water conducting groove 17. The upper side of the water conducting groove 17 is the upper side of a region sandwiched by edges on either side of the water conducting groove 17. The ridge portion 60 prevents water adhering to the side wall 10b from being drawn to the suction port side of the blowing unit, and causes the water to flow from the lower end 60a of the ridge portion 60 to the water conducting groove 17, as indicated by reference sign 16d. The vehicle-use blowing device according to the embodiment is such that the lower end 60a of the ridge portion 60 may be disposed farther than the water conducting groove 17 to the upstream side of the airflow 13a (not shown) . According to this form, the ridge portion 60 prevents water adhering to the side wall 10b from being drawn to the suction port side of the blowing unit, and the water is caused to flow down once from the lower end 60a of the ridge portion 60 to the bottom wall of the intake unit 10. Water caused to flow to the bottom wall of the intake unit 10 flows into the water conducting groove 17 disposed so as to traverse the suction port (reference sign 16c) . Water that has flowed into the water conducting groove 17 flows to the water conducting groove extremity 17a.

Thus far, a description has been given showing an example wherein the extremity 17a of the water conducting groove 17 is disposed in the region S4 (a region such that the overlap region S3, wherein the region S1 linking the center of rotation X of the impeller 22a and the air blowout unit 27 and the region S2 on the inner diameter side of the impeller 22a overlap, is projected onto the boundary 18). Herein, the water conducting groove 17a is preferably disposed farther to the center of rotation X side in the region S4 than a blade inner diameter formed by connecting inner diameter ends of the large number of blades included in the impeller 22a. When the impeller 22a rotates, air flows from farther to the inner side (the center of rotation X side) than the inner diameter ends of the blades in an outer diameter direction of the impeller 22a, but by the water conducting groove extremity 17a being disposed farther to the center of rotation X side in the region S4 than the blade inner diameter, water 16b discharged into an interior of the scroll casing 50 from the water conducting groove extremity 17a can be smoothly led to the air blowout unit 27 by the air flowing in the outer diameter direction.

### Reference Signs List

1 Vehicle-use blowing device
2 Case
3 Air passage
10 Intake unit
10a, 10c Bottom wall
10b Side wall
11 External air inlet port
12 Internal air inlet port
15 Internal-external air switching door
13a, 13b Airflow
13c External air
16, 16b, 16c, 16d Water
17 Water conducting groove
17a Water conducting groove extremity
17b Water conducting groove side face upper edge
17c Water conducting groove extremity bottom face height
17d, 17e Upper edge
17f Groove bottom
18 Boundary between intake unit and blowing unit
19 Guide passage
20 Blowing unit
21 Suction port
22 Blower
22a Impeller
22b Motor
26 Bell mouth
27 Air blowout unit
30 Temperature regulating unit
31 Cooling heat exchanger
32 Heating heat exchanger
33 Air mix door
40 Air distributing unit
41 Defrosting aperture portion
42 Vent aperture portion
43 Foot aperture portion
44, 45 Mode door
50 Scroll casing
60 Ridge portion
60a Ridge portion lower end
X Center of rotation
S1, S2, S4 Region
S3 Overlap region
T1, T2, T Channel sectional area

## Claims

1. A vehicle-use blowing device (1), comprising:
an intake unit (10) having an external air inlet port (11), an internal air inlet port (12), and an internal-external air switching door (15); and
a blowing unit (20) having a suction port (21) that opens in a horizontal direction in a mounted sate of the device on the vehicle, an
impeller (22a) that forms an airflow (13a, 13b), and an air blowout unit (27) that blows the airflow downward, wherein
the intake unit has a bottom wall (10a) that inclines to a lower side toward the suction port in a mounted state of the device on the vehicle, **characterized in that** the intake unit has a water conducting groove (17) in the bottom wall,
the water conducting groove extends in a direction approaching the suction port side while traversing the suction port,
wherein an overlap region (S3) is defined as a region where a region (51) linking a center of rotation (x) of the impeller and the air blowout unit and a region (S2) on an inner diameter side of the impeller overlap,
wherein a region (S4) is defined as a region of a boundary (18) between the intake unit and the blowing unit onto which said overlap rehion (S3) is projected,
wherein an extremity (17) of the water conducting groove is disposed in said region (S4), and wherein the water conducting groove extremity forms a drainage place for drainage.

2. The vehicle-use blowing device according to claim 1, wherein the water conducting groove extremity is dammed by a wall of a bell mouth (26) that forms an aperture portion of the suction port, forming one portion of a reservoir portion that forms the drainage place when water (16) is accumulated in the water conducting groove,
and when the impeller rotates, a surface of water accumulated in the reservoir portion rises and surmounts an end face of the bell mouth, and the water (16b) is fed to the air blowout unit and drained off.

3. The vehicle-use blowing device according to claim 2, wherein a water conducting groove downstream portion that forms the drainage place is formed of a wall of the bell mouth and an intake unit bottom wall (10c) that comes into contact with the wall of the bell mouth.

4. The vehicle-use blowing device according to claim 1, wherein a water conducting groove downstream portion that forms the drainage place forms one portion of a bell mouth (16) that forms an aperture portion of the suction port.

5. The vehicle-use blowing device according to claim 1, wherein a height (17c) of a bottom face of the water conducting groove extremity is lower than a height of an upper edge (17b) of a side face of the water conducting groove, and a water conducting groove downstream portion that forms the drainage place extends as far as an interior of a bell mouth that forms an aperture portion of the suction port.

6. The vehicle-use blowing device according to claim 1, wherein a guide passage (19) that forms the drainage place is provided in a bell mouth that forms an aperture portion of the suction port, a height of a bottom face of the water conducting groove extremity is lower than a height of an upper edge of a side face of the water conducting groove, and the water conducting groove extremity is connected to the guide passage.

7. The vehicle-use blowing device according to any one of claims 1 to 6, wherein upper edges of side faces of the water conducting groove are such that a height (17f) from a groove bottom of an upper edge (17d) on an upstream side of the airflow is greater than that of an upper edge (17e) on a downstream side, or heights from the groove bottom are the same.

8. The vehicle-use blowing device according to any one of claims 1 to 7, wherein a channel sectional area (T) of the water conducting groove decreases further the nearer to the extremity.

9. The vehicle-use blowing device according to any one of claims 1 to 8, wherein a ridge portion (60) with an L-form cross-section is provided in a vertical direction on, of side walls of the intake unit, a side wall (10b) with which a flow of external air comes into contact, and a lower end (60a) of the ridge portion is disposed on an upper side of the water conducting groove, or farther than the water conducting groove to the upstream side of the airflow.

## Patentansprüche

1. Fahrzeuggebläsevorrichtung (1), Folgendes umfassend:
eine Ansaugeinheit (10), die einen Außenlufteinlassstutzen (11), einen Innenlufteinlassstutzen (12) und eine zwischen Innen- und Außenluft umschaltende Klappe (15) aufweist; und
eine Gebläseeinheit (20), die einen Ansaugstutzen (21) aufweist, der sich im montierten Zustand der Vorrichtung am Fahrzeug in eine horizontale Richtung öffnet,
ein Laufrad (22a), das einen Luftstrom (13a, 13b) ausbildet, und eine Luftausblaseinheit (27), die den Luftstrom abwärts ausbläst, wobei
die Ansaugeinheit eine Bodenwand (10a) aufweist, die im montierten Zustand der Vorrichtung am Fahrzeug zu einer Unterseite zum Ansaugstutzen hin geneigt ist, **dadurch gekennzeichnet, dass**
die Ansaugeinheit eine Wasserleitungsnut (17) in der Bodenwand aufweist,
sich die Wasserleitungsnut in eine Richtung erstreckt, die sich der Ansaugstutzenseite annähert, während sie den Ansaugstutzen passiert,
wobei ein Überlagerungsbereich (S3) als Bereich definiert ist, in dem ein Bereich (S1), der einen Drehmittelpunkt (x) des Laufrads mit der Luftausblaseinheit verbindet, einen Bereich (S2) auf einer Innendurchmesserseite des Laufrads überlagert,
wobei ein Bereich (S4) als Bereich einer Begrenzung (18) zwischen der Ansaugeinheit und der Ausblaseinheit definiert ist, auf den der Überlagerungsbereich (S3) projiziert wird,
wobei eine Extremität (17) der Wasserleitungsnut in dem Bereich (S4) angeordnet ist und wobei die Wasserleitungsnutextremität einen Entwässerungspunkt zur Entwässerung ausbildet.

2. Fahrzeuggebläsevorrichtung nach Anspruch 1, wobei die Wasserleitungsnutextremität durch eine Wand einer Aufweitung (26) eingedämmt ist, die einen Öffnungsabschnitt des Ansaugstutzens ausbildet und einen Abschnitt eines Behälterabschnitts ausbildet, der den Entwässerungspunkt ausbildet, wenn sich Wasser (16) in der Wasserleitungsnut angesammelt hat,
und wobei, wenn sich das Laufrad dreht, eine Oberfläche des im Behälterabschnitt angesammelten Wassers ansteigt und eine Endfläche der Aufweitung überwindet und das Wasser (16b) der Luftausblaseinheit zugeführt und abgelassen wird.

3. Fahrzeuggebläsevorrichtung nach Anspruch 2, wobei ein nachgelagerter Abschnitt der Wasserleitungsnut, der den Entwässerungspunkt ausbildet, aus einer Wand der Aufweitung und eine Bodenwand (10c) der Ansaugeinheit, welche die Wand der Aufweitung berührt, ausgebildet ist.

4. Fahrzeuggebläsevorrichtung nach Anspruch 1, wobei ein nachgelagerter Abschnitt der Wasserleitungsnut, der den Entwässerungspunkt ausbildet, einen Abschnitt einer Aufweitung (16) ausbildet, der einen Öffnungsabschnitt des Ansaugstutzens ausbildet.

5. Fahrzeuggebläsevorrichtung nach Anspruch 1, wobei die Höhe (17c) der Bodenfläche der Wasserleitungsnutextremität niedriger ist als die Höhe einer Oberkante (17b) einer Seitenfläche der Wasserleitungsnut, und sich ein nachgelagerter Abschnitt der Wasserleitungsnut, der den Entwässerungspunkt ausbildet, bis in das Innere einer Aufweitung erstreckt, die einen Öffnungsabschnitt des Ansaugstutzens ausbildet.

6. Fahrzeuggebläsevorrichtung nach Anspruch 1, wobei ein Führungsdurchgang (19), der den Entwässerungspunkt ausbildet, in einer Aufweitung vorgesehen ist, die einen Öffnungsabschnitt des Ansaugstutzens ausbildet, wobei die Höhe der Bodenfläche der Wasserleitungsnutextremität niedriger ist als die Höhe einer Oberkante einer Seitenfläche der Wasserleitungsnut, und die Wasserleitungsnutextremität mit dem Führungsdurchgang verbunden ist.

7. Fahrzeuggebläsevorrichtung nach einem der Ansprüche 1 bis 6, wobei die Oberkanten der Seitenflächen der Wasserleitungsnut dergestalt sind, dass die Höhe (17f) vom Nutboden einer Oberkante (17d) auf einer vorgelagerten Seite des Luftstroms größer ist als die Höhe einer Oberkante (17e) auf einer nachgelagerten Seite, oder wobei die Höhen vom Nutboden aus gleich sind.

8. Fahrzeuggebläsevorrichtung nach einem der Ansprüche 1 bis 7, wobei eine Kanalquerschnittsfläche (T) der Wasserleitungsnut bei Annäherung an die Extremität weiter abnimmt.

9. Fahrzeuggebläsevorrichtung nach einem der Ansprüche 1 bis 8, wobei ein Rippenabschnitt (60) mit einem L-förmigen Querschnitt in eine vertikale Richtung an den Seitenwänden der Ansaugeinheit vorgesehen ist, wobei eine Seitenwand (10b), die von einem Außenluftstrom berührt wird, und ein unteres Ende (60a) des Rippenabschnitts an einer Oberseite der Wasserleitungsnut oder weiter als die Wasserleitungsnut auf der vorgelagerten Seite des Luftstroms angeordnet ist.

## Revendications

1. Dispositif de ventilation de véhicule (1), comprenant :
une unité d'admission (10) ayant un orifice d'entrée d'air externe (11), un orifice d'entrée d'air interne (12) et une porte de commutation d'air interne-externe (15) ; et
une unité de ventilation (20) ayant un orifice d'aspiration (21) qui s'ouvre dans une direction horizontale à l'état monté du dispositif sur le véhicule,
une roue (22a) qui forme un flux d'air (13a, 13b), et une unité de ventilation d'air (27) qui souffle le flux d'air vers le bas,
l'unité d'admission ayant une paroi inférieure (10a) qui s'incline vers un côté inférieur en direction de l'orifice d'aspiration à l'état monté du dispositif sur le véhicule, **caractérisé en ce que**
l'unité d'admission a une rainure conductrice d'eau (17) dans la paroi inférieure,
la rainure conductrice d'eau s'étendant dans une direction approchant le côté orifice d'aspiration tout en traversant l'orifice d'aspiration,
une région de chevauchement (S3) étant définie comme une région où une région (S1) reliant un centre de rotation (x) de la roue et l'unité de ventilation d'air et une région (S2) sur un côté diamètre intérieur de la roue se chevauchent,
une région (S4) étant définie comme une région d'une limite (18) entre l'unité d'admission et l'unité de ventilation sur laquelle ladite région de chevauchement (S3) fait saillie,
une extrémité (17) de la rainure conductrice d'eau étant disposée dans ladite région (S4), et
l'extrémité de la rainure conductrice d'eau formant un point de drainage pour l'écoulement.

2. Dispositif de ventilation de véhicule selon la revendication 1, l'extrémité de rainure conductrice d'eau étant bloquée par une paroi d'un évasement doucine (26) qui forme une partie d'ouverture de l'orifice d'aspiration, formant une partie d'une partie de réservoir qui forme l'endroit de drainage lorsque l'eau (16) s'accumule dans la rainure conductrice d'eau,
et lorsque la roue tourne, une surface d'eau accumulée dans la partie réservoir s'élève et surmonte une face d'extrémité de l'évasement doucine, et l'eau (16b) est acheminée vers l'unité de ventilation d'air et drainée.

3. Dispositif de ventilation de véhicule selon la revendication 2, une partie aval de rainure conductrice d'eau qui forme l'endroit de drainage étant formée d'une paroi de l'évasement doucine et d'une paroi inférieure d'unité d'admission (10c) qui entre en contact avec la paroi de l'évasement doucine.

4. Dispositif de ventilation de véhicule selon la revendication 1, une partie aval de rainure conductrice d'eau qui forme l'endroit de drainage formant une partie d'un évasement doucine (16) qui forme une partie d'ouverture de l'orifice d'aspiration.

5. Dispositif de ventilation de véhicule selon la revendication 1, une hauteur (17c) d'une face inférieure de l'extrémité de rainure conductrice d'eau étant inférieure à une hauteur d'un bord supérieur (17b) d'une face latérale de la rainure conductrice d'eau, et une partie aval de rainure conductrice d'eau qui forme l'endroit de drainage s'étendant jusqu'à l'intérieur d'un évasement doucine qui forme une partie d'ouverture de l'orifice d'aspiration.

6. Dispositif de ventilation de véhicule selon la revendication 1, un passage de guidage (19) qui forme l'endroit de drainage étant situé dans un évasement doucine qui forme une partie d'ouverture de l'orifice d'aspiration, une hauteur d'une face inférieure de l'extrémité de rainure conductrice d'eau étant inférieure à une hauteur d'un bord supérieur d'une face latérale de la rainure conductrice d'eau, et l'extrémité de rainure conductrice d'eau étant reliée au passage de guidage.

7. Dispositif de ventilation de véhicule selon l'une quelconque des revendications 1 à 6, les bords supérieurs des faces latérales de la rainure conductrice d'eau étant tels qu'une hauteur (17f) à partir du fond de rainure d'un bord supérieur (17d) sur un côté amont du flux d'air étant supérieure à celle d'un bord supérieur (17e) sur un côté aval, ou que les hauteurs à partir du fond de rainure sont identiques.

8. Dispositif de ventilation de véhicule selon l'une quelconque des revendications 1 à 7, une zone sectionnelle de canal (T) de la rainure conductrice d'eau diminuant en se rapprochant de l'extrémité.

9. Dispositif de ventilation de véhicule selon l'une quelconque des revendications 1 à 8, une partie de crête (60) avec une section transversale en forme de L étant fournie dans une direction verticale sur, parmi les parois latérales de l'unité d'admission, une paroi latérale (10b) avec laquelle un flux d'air externe entre en contact, et une extrémité inférieure (60a) de la partie de crête étant disposée sur un côté supérieur de la rainure conductrice d'eau, ou plus loin que la rainure conductrice d'eau vers le côté amont du flux d'air.
